(19) **Europäisches Patentamt / European Patent Office / Office européen des brevets**

(11) **EP 3 295 074 B1**

(12) **FASCICULE DE BREVET EUROPEEN**

(45) Date de publication et mention
de la délivrance du brevet:
**08.01.2020 Bulletin 2020/02**

(21) Numéro de dépôt: **16726131.2**

(22) Date de dépôt: **04.05.2016**

(51) Int Cl.:
***F17C 5/06*** (2006.01)

(86) Numéro de dépôt international:
**PCT/FR2016/051063**

(87) Numéro de publication internationale:
**WO 2016/181057 (17.11.2016 Gazette 2016/46)**

(54) **PROCÉDÉ ET DISPOSITIF DE REMPLISSAGE OU DE SOUTIRAGE D'UN RÉSERVOIR DE GAZ SOUS PRESSION**

VERFAHREN UND VORRICHTUNG ZUR BEFÜLLUNG ODER ENTNAHME AUS EINEM DRUCKGASTANKS

METHOD AND DEVICE FOR FILLING OR WITHDRAWING FROM A PRESSURIZED GAS TANK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.05.2015 FR 1554207**

(43) Date de publication de la demande:
**21.03.2018 Bulletin 2018/12**

(73) Titulaire: **L'Air Liquide Société Anonyme pour l'Etude et l'Exploitation des Procédés Georges Claude 75007 Paris (FR)**

(72) Inventeurs:
• **BOURGEOIS, Thomas**
  **75018 Paris (FR)**

• **AMMOURI, Fouad**
  **91300 Massy (FR)**
• **WEBER, Mathilde**
  **94250 Gentilly (FR)**
• **VYAZMINA, Elena**
  **75013 Paris (FR)**

(74) Mandataire: **De Cuenca, Emmanuel Jaime L'Air Liquide S.A. Direction Propriété Intellectuelle 75 Quai d'Orsay 75321 Paris Cedex 07 (FR)**

(56) Documents cités:
**EP-A1- 2 824 378      WO-A1-2013/014346**
**FR-A1- 2 884 592      US-A1- 2014 290 790**

**Description**

La présente invention concerne un procédé de remplissage ou de soutirage d'un réservoir de gaz sous pression. Un tel procédé est connu de EP 2 824 378 A1.

L'invention concerne plus un procédé de remplissage ou de soutirage d'un réservoir de gaz sous pression, notamment de carburant tel que de l'hydrogène gazeux, le réservoir étant délimité par une paroi de forme générale cylindrique ayant des dimensions et des propriétés thermo-physiques déterminées et connues, le procédé comprenant une régulation du débit du flux de gaz introduit ou, respectivement du gaz soutiré, et/ou de la température dudit gaz introduit, pour éviter que le réservoir n'atteigne un seuil haut déterminé de température ou un seuil bas déterminé de température.

L'invention concerne en particulier le remplissage ou le soutirage de réservoirs d'hydrogène sous pression en particulier des réservoirs composites stockant du gaz à des pressions élevée, notamment 200bar, 700bar ou 1000bar.

Ces réservoirs composites (notamment de type IV) ont une résistance aux températures extrêmes plus limitée que les réservoirs métalliques. Par exemple, les températures limites d'utilisation de tels réservoirs doivent être comprises entre -40°C et +85°C.

Ainsi, les processus de remplissage (produisant un échauffement) et le processus de soutirage (produisant un refroidissement) doivent être contrôlés.

Ce contrôle peut être réalisé notamment en contrôlant le débit de gaz et/ou sa température.

Un standard (SAE) de remplissage de véhicules automobiles a été développé pour établir des recommandations de refroidissement et des vitesses de remplissage en fonction de conditions initiales (température ambiante, pression initiale dans le réservoir...). Ce modèle se base sur la température du gaz dans le réservoir et non pas la température du réservoir (qui est généralement inférieure à celle du gaz).

La mesure de la température maximale atteinte par le réservoir est cependant difficilement mesurable.

Dans ces conditions, les recommandations des conditions de remplissage établies par ce standard sont considérées trop contraignantes et donc en partie inutiles et générant des surcoûts importants.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce qu'il comprend une étape d'estimation en temps réel par calcul d'au moins une température du réservoir parmi : la température moyenne de la paroi du réservoir Twall,average(r,t) en fonction du temps (t), la température maximale atteinte par la paroi du réservoir Twall,max(t) en fonction du temps, la température minimale atteinte par la paroi du réservoir Twall,min(t) en fonction du temps et en ce que, la régulation du débit du flux de gaz ou de la température dudit gaz est réalisée en fonction de ladite température du réservoir calculée.

Selon l'invention il est ainsi possible d'estimer, via un modèle mathématique basé sur des mesures de pression dans le réservoir et de la température ambiante, la température maximale ou minimale atteint par la paroi du réservoir.

Les valeurs de pression du gaz et de température ambiante sont des données externes mesurées. C'est-à-dire qu'il n'est pas nécessaire de mesures complexes dans le réservoir rempli ou soutiré.

Un modèle mathématique dynamique à trois dimensions peut être utilisé pour calculer la température dans le réservoir, y compris au niveau de sa paroi. Cependant, de préférence l'invention utilise un modèle simplifié.

Ce modèle simplifié peut être basé notamment sur les données d'entrée que sont : la température du gaz dans la ligne de transfert vers le réservoir, sa pression, les caractéristiques géométriques du réservoir, la température ambiante.

D'autres paramètres thermo-physiques du réservoir peuvent être utilisés comme par exemple la conductivité thermique, la capacité calorifique et la masse volumique.

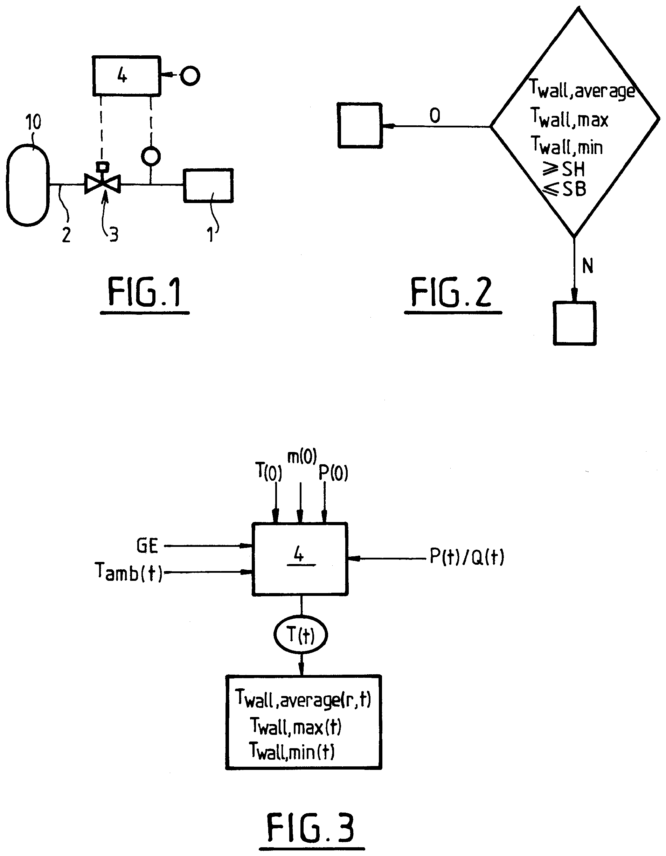

Comme illustré à la figure 3, la masse initiale m(0) de gaz dans le réservoir 1 peut également une donnée d'entrée connue ou estimée. De même pour le débit Q(t) de gaz transféré au temps t.

De préférence, le modèle calcule sur cette base et en temps réel la température moyenne du gaz dans le réservoir et son état de remplissage (« SOC= pourcentage de remplissage dans lequel 100% correspond à la quantité massique de gaz du réservoir rempli à sa pression de service et une température homogène déterminée, notamment 15°C). Cet état de charge SOC est directement lié à la température moyenne du gaz dans le réservoir et à sa pression via une équation d'état du gaz.

De préférence, le modèle calcule sur cette base en temps réel également la température moyenne de la paroi du réservoir selon deux dimensions Tw,average(r,t) dans laquelle r est la coordonnée spatiale (notamment le rayon r par rapport à l'axe central longitudinal du réservoir cylindrique) et t le temps.

De préférence, le modèle calcule sur cette base en temps réel également la température maximale de la paroi du réservoir Tw,max(t) dans laquelle t est le temps. Le modèle peut calculer également la température minimale de la paroi du réservoir Tw,min(t) en fonction du temps t.

Ces données peuvent être obtenues le cas échéant à partir de la température Tgas,average(t) du gaz (calculée).

Ce modèle mathématique et thermodynamique peut être intégré à un contrôleur logique programmable ("PLC") permettant d'estimer en temps réel la température extrême durant un remplissage ou un soutirage. La température moyenne du gaz dans le réservoir peut également être calculée.

A partir de cette donnée de la température extrême de la paroi, le contrôleur peut ajuster la vitesse de transfert de gaz (remplissage ou soutirage) et/ou le niveau de refroidissement du gaz (remplissage) pour rester dans les températures de sécurité.

Cette solution permet d'éviter des régulations de débit ou des refroidissements surdimensionnés par rapport au besoin réel.

Selon d'autres particularités possibles :

- lors d'un remplissage, lorsque la température du réservoir calculée atteint un seuil haut (SH) déterminé, le flux et notamment le débit de gaz est diminué et/ou la température du gaz fourni au réservoir est diminuée par échange thermique avec une source de froid,
- lors d'un remplissage, lorsque la température du réservoir calculée est inférieure au seuil haut d'une valeur déterminée, le flux de gaz et notamment son débit est augmenté et/ou la température dudit gaz et/ou du réservoir est augmentée par échange thermique avec une source de chaleur,
- le procédé comprend une étape de calcul du Nombre de Richardson (Ri) pour le gaz dans le réservoir en fonction du temps, une étape de comparaison du nombre de Nombre de Richardson calculé avec une valeur de référence (Vr) déterminée comprise entre 0,05 et 1,5 et de préférence entre 0,05 et 0,15 et, lorsque nombre de Nombre de Richardson calculé est inférieur à valeur de référence déterminée le température du gaz dans le réservoir est considérée homogène c'est-à-dire que la température maximale atteinte par la paroi du réservoir Twall,max(t) en fonction du temps est égale à la température moyenne de la paroi du réservoir Twall,average(r,t) en contact avec le gaz en fonction du temps (t) : Twall,max(t)= Twall,average(r=r_liner,t).
- lorsque le nombre de Nombre de Richardson calculé est supérieure à valeur de référence déterminée, la température du gaz dans le réservoir est considérée hétérogène c'est-à-dire que la température maximale atteinte par la paroi du réservoir Twall,max(t) en fonction du temps n'est pas égale à la température moyenne de la paroi du réservoir en contact avec le gaz en fonction du temps (t) c'est-à-dire au niveau de ce qui forme le « liner » du réservoir, Twall,average(r= rayon du liner du réservoir, t), et dans ces conditions, le procédé comporte une étape d'augmentation du débit de gaz fourni au réservoir pour diminuer la valeur du Nombre de Richardson calculé au-dessous de la valeur de référence (Vr) déterminée et rendre ainsi le gaz homogène en température,
- lors d'un remplissage, lorsque le Nombre de Richardson est supérieur à la valeur de référence, le flux de gaz et notamment son débit est augmenté,
- le procédé comprend, avant remplissage ou, respectivement, avant soutirage, une étape de détermination ou de détection par capteur(s), de la température initiale T(0) du gaz dans le réservoir, de la pression initiale P(0) du gaz dans le réservoir, de la température moyenne initiale de la paroi du réservoir $T_{w, average}(0)$ et une étape de détermination de la masse de gaz initiale dans le réservoir m(0) puis, lors d'un remplissage lorsque le nombre de Nombre de Richardson calculé est inférieure à valeur de référence déterminée le température du gaz dans le réservoir est considérée homogène, c'est-à-dire que la température maximale atteinte par la paroi du réservoir Twall,max(t) en fonction du temps est égale à la température moyenne de la paroi du réservoir Twall,average(r= r=rayon du liner du réservoir,t) en contact avec le gaz en fonction du temps (t), et dans ces conditions, le procédé comporte, au cours du remplissage, une étape de calcul de la température Tgas,average(t) moyenne du gaz dans le réservoir en temps réel en fonction du temps et de la température moyenne de la paroi Twall,average(r,t) en temps réel en fonction du temps (t) à partir d'un bilan de masse et d'enthalpie appliqué au gaz dans le réservoir et à partir également d'un bilan d'énergie dans la paroi du réservoir, de l'équation d'état du gaz (notamment équation des gaz réels), et d'un bilan des échanges thermiques entre le gaz et la paroi, et entre la paroi du réservoir est l'extérieur,
- le procédé comprend, avant remplissage ou, respectivement, avant soutirage, une étape de détermination ou de détection par capteur(s), de la température initiale T(0) du gaz dans le réservoir, de la pression initiale P(0) du gaz dans le réservoir, de la température moyenne initiale de la paroi du réservoir $T_{w, average}(0)$ et une étape de détermination de la masse de gaz initiale dans le réservoir m(0) puis, lors d'un remplissage lorsque le nombre de Nombre de Richardson calculé est supérieure à valeur de référence déterminée la température du gaz dans le réservoir est considérée hétérogène c'est-à-dire que la température maximale atteinte par la paroi du réservoir Twall,max(t) en fonction du temps n'est pas égale à la température moyenne de la paroi du réservoir Twall,average(r)=r_liner,t) en contact avec le gaz en fonction du temps (t), et dans ces conditions, le procédé comporte, au cours du remplissage, une étape de calcul de la température Tgas,average(t) moyenne du gaz dans le réservoir en temps réel en fonction du temps (t) et de la température moyenne de la paroi Twall,average(r,t) en temps réel en fonction du temps à partir d'un bilan de masse et d'enthalpie appliqué au gaz dans le réservoir et d'un bilan d'énergie dans la paroi du réservoir, de l'équation d'état du gaz (équation des gaz parfaits ou réels), et d'un bilan des échanges thermiques entre la paroi du réservoir est l'extérieur et en ce que le procédé comprend une étape de calcul de la température maximale atteinte par la paroi du réservoir Twall,max(t) en fonction du temps, cette température maximale atteinte par la paroi du réservoir Twall,max(t) en fonction du temps étant obtenue par corrélation à partir de la température Tgas,average(t) moyenne du gaz dans le réservoir calculée en temps réel en fonction du temps et en fonction de la température moyenne de la paroi Twall,average(r,t) en temps réel en fonction du temps (t),

- le procédé comprend une étape de calcul de l'enthalpie hin(t) du gaz entrant ou sortant du réservoir en fonction du temps, une étape de mesure ou de calcul de la masse de gaz m(t) introduite ou soutiré du réservoir en fonction du temps ou, respectivement, une étape de détermination de la pression P(t) dans le réservoir en fonction du temps, le procédé comprenant une étape de détermination de la température moyenne du gaz Tgas,average(t) à l'instant t dans le réservoir en degré K, cette température moyenne Tgas,average(t) étant exprimée comme une fonction du premier degré de la température moyenne du gaz T(t-1) à l'instant précédent (t-1) et d'un coefficient d'échange chaleur convectif entre le gaz et la paroi interne du réservoir (1) à l'instant (t-1) en W.m$^{-2}$.K$^{-1}$, dans lequel le coefficient d'échange chaleur $k_g$(t-1) est donné par la relation $k_g$=($\lambda$g/Dint).Nuint dans laquelle $\lambda$g est la conductivité thermique du gaz dans le réservoir en W.m$^{-1}$.K$^{-1}$, Dint est le diamètre interne du réservoir (1) en mètre et NuDint le nombre de Nusselt du gaz dans le réservoir (1) (sans dimension), et dans lequel le nombre de Nusselt du gaz est exprimé en fonction du nombre de Reynolds (Redin) (sans dimension) relatif à la convection forcée dans le réservoir et du nombre de Rayleigh (RaDint) (sans dimension) relatif à la convection naturelle interne dans le réservoir selon une formule NuDint= a.RaDint$^b$ + c.Redin$^d$ dans laquelle a et c sont des coefficients sans dimension fonction du rapport (Lint/Dint) entre la longueur interne du réservoir Lint en mètre et le diamètre interne du réservoir Dint en mètre et du rapport (Dint/di) entre le diamètre interne du réservoir Dint en mètre et le diamètre de l'injecteur di en mètre, a, b, c et d étant des nombres réels positifs sans dimension, a étant compris entre 0 et 1, b étant compris entre 0,2 et 0,5, c étant compris entre 0 et 1 et d étant compris entre 0.5 et 0.9,

- le procédé comprend une étape d'estimation de la température maximale atteinte dans l'épaisseur du réservoir Twall,max(t) en fonction du temps, ou respectivement la température minimale atteinte dans l'épaisseur du réservoir Twall,min(t) en fonction du temps, à partir de la température Tgas,average(t) moyenne du gaz dans le réservoir calculée en temps réel en fonction du temps (t), ladite température maximale ou minimale étant obtenue à partir de tableau(x) de correspondance obtenu(s) par des expérimentations, et/ou à partir de calcul et/ou de simulations de sorte qu'à une température Tgas,average(t) moyenne du gaz dans le réservoir calculée en temps réel en fonction du temps (t) correspond, selon les conditions connues de débit de gaz, du diamètre d'injecteur de gaz dans le réservoir et des dimensions et caractéristiques du réservoir, une température maximale ou, respectivement minimale, dans l'épaisseur du réservoir en fonction du temps,

- le Nombre de Richardson (Ri) pour le gaz dans le réservoir en fonction du temps est calculé à partir du nombre de Grashoff (Gr) pour le gaz et du nombre de Reynolds (Re) pour le gaz au temps (t) selon la formule suivante : Ri= Gr/Re$^2$, dans lequel les nombres de Grashof (Gr) et de Reynolds (Re) sont des données connues ou calculées à partir de la valeur de pression du gaz mesurée ou de la masse de gaz dans le réservoir et de la température du gaz Tgas,average(t) moyenne du gaz dans le réservoir,

- lors d'un soutirage, lorsque la température du réservoir calculée atteint un seuil bas déterminé, le flux de gaz est diminué,

- le procédé comprend une étape de mesure ou de calcul en continu de l'un au moins parmi : la pression Pin(t) au temps (t) du gaz introduit dans ou soutiré du réservoir, la température Tin(t) au temps (t) du gaz introduit dans ou soutiré du réservoir, la P(t) pression dans le réservoir au temps (t), la température ambiante (Tamb(t) au temps (t), la masse de gaz m(t) dans le réservoir au temps (t),

- le procédé est mis en oeuvre par une station de remplissage de réservoirs de gaz hydrogène comprenant au moins une source d'hydrogène à haute pression, au moins une conduite de transfert de reliant sélectivement la source à un réservoir, et un organe électronique d'acquisition, de stockage et de traitement de données tel qu'un ordinateur ou microprocesseur, ledit organe pilotant le transfert de gaz entre la source et le réservoir, la logique (4) électronique étant programmée pour calculer en temps réel au moins une température du réservoir parmi : la température moyenne de la paroi du réservoir Twall,average(r,t) en fonction du temps (t), la température maximale atteinte dans l'épaisseur du réservoir Twall,max(t) en fonction du temps, la température minimale atteinte dans l'épaisseur du réservoir Twall,min(t) en fonction du temps et pour réguler le débit du flux de gaz et/ou de la température dudit gaz en fonction de ladite température du réservoir calculée,

- lors d'un soutirage, lorsque la température du réservoir calculée est supérieure au seuil bas (SB), le flux de gaz est augmenté,

- la température initiale T(0) du gaz dans le réservoir, et la température moyenne initiale de la paroi du réservoir T$_w$(0) sont approximée comme étant égales à la température ambiante mesurée ou renseignée avant remplissage,

- les dimensions géométriques du réservoir sont connues, par exemple communiquées avant remplissage notamment : la longueur interne (Lint) du réservoir, le diamètre interne (Dint) du réservoir,

- le diamètre (di) de l'injecteur en mètre est également un paramètre connu avant remplissage,

- la masse de gaz initiale m(0) dans le réservoir (en kg) est calculée par une équation d'état du gaz à partir des valeurs connues de pression initiale P(0) (en Pa) et de température initiale T(0) du gaz (en K),

- en cas de soutirage le nombre NuDint de Nusselt (sans dimension) du gaz dans le réservoir (1) est donné par la formule NuDint= a.RaDint[b,]
- les propriétés thermo-physiques déterminées et connues du réservoir comprennent au moins l'un parmi : la masse volumique, la capacité calorifique spécifique, la conductivité thermique de l'enveloppe intérieure du réservoir (liner), la masse volumique, la capacité calorifique spécifique, la conductivité thermique du composite, le volume du réservoir, les longueurs et diamètres internes et externes du réservoirs, l'épaisseur du liner et du composite, la surface interne et externe du réservoir, la masse totale du liner, la masse totale du composite, le diamètre d'injecteur dans le réservoir, le coefficient de perte de charge à l'entrée de la bouteille, l'émissivité de la surface externe du réservoir,
- la température Tgas,average(t) moyenne du gaz dans le réservoir est la température moyennée pour le volume de stockage du réservoir (en K),
- le réservoir est de forme générale cylindrique, la température moyenne de la paroi du réservoir Twall,average(r, t) en fonction d'une variable d'espace (r) et du temps (t), est la température dans l'épaisseur de la paroi du réservoir selon une direction transverse à la paroi, la variable d'espace (r) étant la position dans l'épaisseur de la paroi selon une direction parallèle à un rayon du cylindre à partir de l'axe longitudinal central du cylindre (en m),
- la température maximale atteinte dans l'épaisseur du réservoir Twall,max(t) en fonction du temps est la température maximale (en K) atteinte par la paroi au temps (t), quel que soit la portion de la paroi, c'est-à-dire une température maximale au sens spatial du terme,
- la température initiale T(0) du gaz dans le réservoir est mesurée par un capteur de température, par exemple un capteur de température ambiante,
- la pression initiale P(0) du gaz dans le réservoir (en Pa) est mesurée par un capteur de pression à l'entrée ou dans le réservoir,
- la température moyenne initiale de la paroi du réservoir $T_w(0)$ (en K) est mesurée par un capteur de température ou est approximée à la température initiale du gaz dans le réservoir T(0),
- la détermination de la masse de gaz initiale dans le réservoir m(0) est calculée via l'équation des gaz parfaits ou réels à partir des données suivantes connues : la pression initiale P(0) du gaz dans le réservoir, le volume V du réservoir, la température initiale du gaz dans le réservoir T(0) et du facteur de compressibilité Z du gaz réel (sans dimension) ou de la constante R des gaz parfaits,
- le seuil haut (SH) de température est compris entre 65 et 105°C et de préférence égal à 85°C,
- le flux de gaz est diminué lors d'un remplissage en réduisant la vitesse d'augmentation de pression dans le réservoir,
- le seuil bas de température est compris entre -50°C et -30°C et de préférence égal à -40°C,
- la température et la pression du gaz dans le réservoir sont considérées homogènes dans les estimations ou calculs,
- la vitesse de remplissage est contrôlée au moyen d'une vanne ou un régulateur de pression de type proportionnel intégral,
- le réservoir est un réservoir composite de type IV ou III,
- la paroi du réservoir composite comprend un liner plastique ou métallique et une couche de matériau composite,
- la température moyenne du gaz Tgas,average(t) est déterminée en temps réel par la résolution numérique de deux bilans enthalpiques : un premier bilan enthalpique appliqué au gaz injecté dans le réservoir et un second bilan enthalpique appliqué à la paroi du réservoir; de la résolution numérique de l'équation de la chaleur dans la paroi ;en utilisant l'équation d'état des gaz réels appliquée au gaz dans le réservoir, les propriétés thermophysiques du gaz tel que le facteur de compressibilité Z, la capacité thermique massique cp et l'enthalpie massique du gaz étant connues,
- la température moyenne (moyenne en deux dimension 2D) de la paroi du réservoir Tw(r,t) est déterminée en temps réel par la résolution numérique de deux bilans enthalpiques : un premier bilan enthalpique appliqué au gaz injecté dans le réservoir et un second bilan enthalpique appliqué à la paroi du réservoir; de la résolution numérique de l'équation de la chaleur dans la paroi ; en utilisant l'équation d'état des gaz réels appliquée au gaz dans le réservoir, les propriétés thermophysiques du gaz tel que le facteur de compressibilité Z, la capacité thermique massique Cp et l'enthalpie massique h du gaz étant connues,
- le nombre de Richardson (sans dimension) est calculé comme le rapport entre le nombre de Grashoff (sans dimension) et le nombre de Reynolds (sans dimension) au carré,
- le nombre de Reynolds peut être égal au nombre de Reynolds du gaz en entrée de réservoir (masse volumique en entrée que multiplie la vitesse en entrée que multiplie le diamètre de l"injecteur de gaz et divisé par la viscosité dynamique à l'entrée),
- le nombre de Reynolds peut être égal au nombre de Reynolds au fond de la bouteille (masse volumique du gaz dans la bouteille que multiplie la vitesse du gaz au fond de la bouteille que multiplie le diamètre de la bouteille et divisé par la viscosité dynamique du gaz,
- la vitesse au fond de la bouteille (vf) (en m.s.[-1]) peut être calculée à partir de la vitesse du gaz en entrée de bouteille (ve), du diamètre de l'injecteur (di) (en mètre), de la longueur interne de la bouteille (Lint) (en mètre) via la formule suivante : vf = (ve.6,2.di)/Lint

- le nombre de Grashof Gr peut être calculé par la formule : constante d'accélération du gaz * coefficient de dilatation thermique isobare * (T (t) - Tw(r = rliner, t))*(Dint)$^3$/(viscosité cinématique du gaz)$^2$,
- le réservoir a un rapport (Lint/Dint) entre la longueur interne du réservoir Lint en mètre et le diamètre interne du réservoir Dint en mètre compris entre 1 et 7 et de préférence compris entre 1,8 et 6,6, et de préférence inférieur à 4,5,
- le rapport (Dint/di) entre le diamètre interne du réservoir Dint en mètre et le diamètre di de l'injecteur en mètre est compris entre 30 et 100 et de préférence compris entre 35,0 et 72,3,
- le nombre de Reynolds (Red) (sans dimension) relatif à la convection forcée dans le réservoir est compris entre 5,6.10$^4$ et 2,0.10$^6$
- le nombre de Rayleigh (Radint) (sans dimension) relatif à la convection naturelle interne dans le réservoir (1) est compris entre 8,0.10$^8$ et 1,0.10$^{12}$
- la masse mt(t) de gaz dans le réservoir est calculée en temps réel via l'équation d'état du gaz (équation des gaz réels de préférence) à partir de la valeur de température moyenne du gaz Tgas,average(t) dans le réservoir calculée (1) et de la pression P(t) du gaz dans le réservoir mesurée en temps réel

L'invention peut concerner également un dispositif de remplissage ou de soutirage de gaz d'un réservoir comprenant une conduite de transfert comprenant une vanne et raccordable à un réservoir, le dispositif comprenant un organe électronique d'acquisition, de stockage et de traitement de données tel qu'un ordinateur ou microprocesseur, ledit organe pilotant le transfert de gaz entre la source et le réservoir, la logique électronique étant programmée pour calculer au moins une température du réservoir parmi : la température moyenne de la paroi du réservoir Twall,average(r,t) selon son épaisseur (rayon r) et en fonction du temps (t), la température maximale atteinte dans l'épaisseur du réservoir Twall,max(t) en fonction du temps, la température minimale atteinte dans l'épaisseur du réservoir Twall,min(t) en fonction du temps et pour réguler le du débit du flux de gaz en fonction de ladite température du réservoir courante calculée..

L'invention peut concerner également tout dispositif ou procédé alternatif comprenant toute combinaison des caractéristiques ci-dessus ou ci-dessous, dans le cadre des revendications.

D'autres particularités et avantages apparaîtront à la lecture de la description ci-après, faite en référence aux figures dans lesquelles :

- la figure 1 représente une vue schématique et partielle illustrant un exemple d'installation de remplissage de réservoir pouvant mettre en ouvre l'invention,
- les figures 2 à 6 illustrent de façon schématique et partielle différents logigrammes illustrant des exemples d'étapes pouvant être mises en œuvre par le procédé selon l'invention.

La figure 1 illustre schématiquement une station de remplissage (ou de soutirage) d'un réservoir 1 de gaz sous pression, notamment de carburant tel que de l'hydrogène gazeux.

Le réservoir 1, par exemple un réservoir composite de type IV, est délimité par une paroi 1 de forme générale cylindrique ayant des dimensions et des propriétés thermo-physiques déterminées et connues.

La station peut comprendre au moins une source 10 d'hydrogène à haute pression, au moins une conduite 2 de transfert reliant sélectivement la source 1 au réservoir 1 et un organe 4 électronique d'acquisition, de stockage et de traitement de données tel qu'un ordinateur ou microprocesseur.

L'organe 4 électronique pilote le transfert de gaz entre la source 10 et le réservoir 1 et peut être programmée pour calculer en temps réel au moins une température du réservoir (1) parmi : la température moyenne de la paroi du réservoir Twall,average(r,t) en fonction du temps (t), la température maximale atteinte dans l'épaisseur du réservoir Twall,max(t) en fonction du temps, la température minimale atteinte dans l'épaisseur du réservoir Twall,min(t) en fonction du temps et pour réguler le débit du flux de gaz et/ou de la température dudit gaz en fonction de ladite température du réservoir calculée (cf. figure 3).

Bien entendu, classiquement, en plus du contrôle de la température extrême atteinte par la paroi du réservoir (minimale et/ou maximale), la masse de gaz dans le réservoir est de préférence contrôlée également (ou tout autre paramètre reflétant la quantité de gaz dans le réservoir). Cette masse de gaz peut être calculée classiquement à partir de la température du gaz calculée et de la pression du gaz mesurée.

Les paramètres d'entrée connus pour ce ou ces calculs d'estimations comprennent par exemple :

- les propriétés thermodynamiques du gaz (du réservoir notamment de son liner et de structure composite), la géométrie GE du réservoir (longueur, diamètre, ...). Ces données sont des constantes connues.
- les conditions connues de Pression P(0), température T(0) et température de la paroi Twall(0) à l'instant initial t=0. Ces conditions peuvent être mesurées ou déterminées ou approximées,
- les conditions en temps réel de Pression du gaz entrant au temps t Pin(t), de température du gaz entrant Tin(t) au temps t, la pression du gaz dans le réservoir P(t) au temps t (mesurée par exemple dans la conduite reliée à l'entrée/sortie du réservoir 1), la température ambiante Tamb(t) au temps t.

- des coefficients a, b, c, d d'échange de chaleur et de corrélation (explicités ci-après).

Les coefficients a, b, c, d peuvent être obtenus par des essais expérimentaux pour chaque type de réservoir à partir de tests de montée et de chute de pression dans le réservoir. Ces coefficients peuvent le cas échéant être corrélés à des dimensions ou rapports de dimensions du réservoir.

A partir de ces données d'entrée connues, l'organe 4 électronique peut être configuré pour calculer en temps réel les données de sortie suivantes :

- la température moyenne du gaz dans le réservoir T(t)= Tgas,average(t) au temps t en fonction du temps t,
- la masse m(t) de gaz dans le réservoir au temps,
- la température moyenne de la paroi du réservoir Twall,average(r,t) en fonction du temps t, r étant la coordonnée de rayon à partir de l'axe longitudinal du réservoir,
- la température maximale atteinte par la paroi du réservoir Twall,max(t) en fonction du temps,
- le nombre de Richardson Ri(t) pour le gaz dans le réservoir au temps t (cf. ci-après).

La température moyenne de la paroi du réservoir Twall,average(r,t) représente la moyenne selon deux dimensions (2D), c'est-à-dire qu'elle représente la température de la couche de paroi à la coordonnée r prise à partir de l'axe longitudinal du réservoir. Cette température est homogène selon deux dimensions mais peut varier selon le rayon r. Cette température moyenne est calculée en résolvant par exemple l'équation de la chaleur dans la paroi.

La température maximale (respectivement minimale) atteinte par la paroi du réservoir Twall,max(t) en fonction du temps peut être la température de la paroi au temps t au niveau de l'interface entre le gaz et la paroi.

Ci-après sera décrit un exemple d'utilisation d'un tel modèle pour une station de remplissage.

Supposons un remplissage réalisé à une température de gaz d'entrée constante. A chaque intervalle de temps le modèle (mis en œuvre par l'organe 4 électronique qui pilote le remplissage/soutirage) estime en temps réel la température maximale atteinte par la paroi du réservoir Twall,max(t) en fonction du temps.

Si cette température maximale devient proche de la limite admissible (85°C par exemple), dans ce cas l'organe 4 de contrôle peut réduire la montée en pression en agissant par exemple sur la vanne 3 de contrôle. Cette diminution de la rampe de pression (augmentation de pression par unité de temps) réduit ou supprime l'augmentation de la température. Si la température maximale est en-dessous de la valeur admissible, la vitesse d'augmentation de pression peut être augmentée.

Il s'agit donc d'un procédé de contrôle du débit de remplissage en fonction de la température maximale de la paroi du réservoir estimée/calculée.

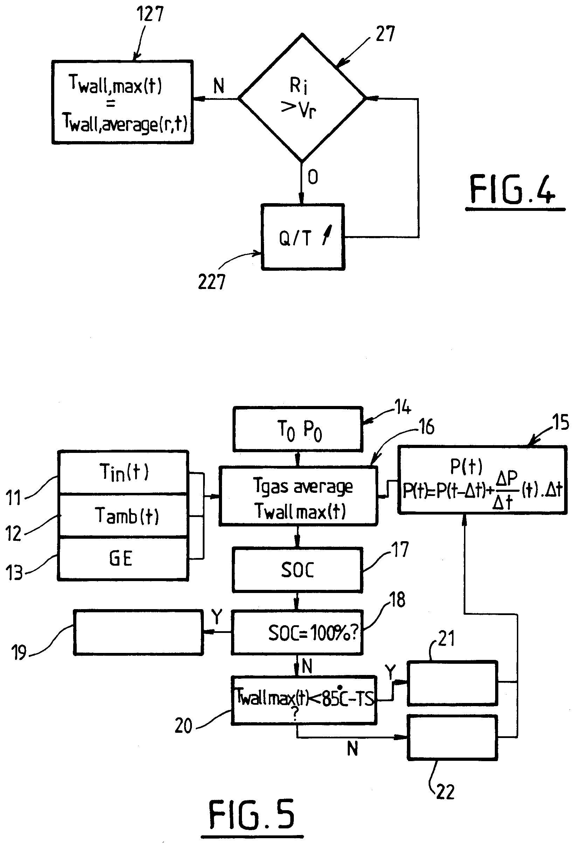

Un exemple d'application est illustré schématiquement à la figure 5. Ainsi, à partir des paramètres d'entrée (étapes 11, 12, 13, 14,15) les températures moyenne du gaz Tgas,average(t) en fonction du temps t et la température maximale atteinte par la paroi du réservoir Twall,max(t) en fonction du temps sont calculées (étape 16). Sur cette base, l'état de charge SOC est calculé (étape 17) puis cet état de charge est comparé avec l'état de charge cible (100%). Si l'état de charge cible est atteint le remplissage est interrompu (étape 19) sinon il est poursuivi et la température maximale du réservoir Twall,max(t) est comparée au seuil limite 85°C (moins un facteur de sécurité TS) cf. étape 20. Si cette température reste dans les limites admissibles (étape 21) la vitesse de remplissage peut être maintenue ou augmentée et le processus retourne à l'étape de mesure de la pression de (l'étape 15). Si cette température n'est pas dans les limites admissibles (étape 22) la vitesse de remplissage peut être réduite et le processus retourne à l'étape de mesure de la pression P(t) de (l'étape 15).

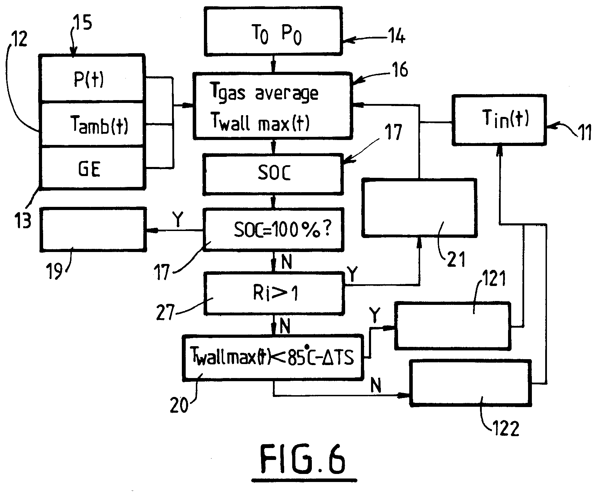

Alternativement ou cumulativement au contrôle du débit, la température du gaz peut être contrôlée (le gaz est refroidi ou son refroidissement est augmenté si la température maximale s'approche de la limite admissible). Un tel exemple est illustré à la figure 6. Le processus de la figure 6 se distingue de celui de la figure 5 uniquement en ce que, à l'issue de l'étape 17 de calcul de l'état de charge SOC, le processus comprend une étape 27 durant laquelle le nombre de Richardson Ri du gaz est comparé à une valeur de référence Vr (ici Vr=1). Si le nombre de Richardson R1 excède la valeur de référence (« Y, » étape 21) la vitesse de remplissage peut être maintenue ou augmentée et le processus retourne à l'étape 16 de calcul de la température moyenne du gaz Tgas,average en fonction du temps t et de la température maximale atteinte par la paroi du réservoir Twall,max(t) en fonction du temps. Si le nombre de Richardson Ri est inférieur à la valeur de référence (« N », étape 21) la température maximale du réservoir Twall,max(t) est comparée au seuil limite (moins un facteur de sécurité TS) cf. étape 20. Selon que cette température maximale du réservoir Twall,max(t) atteint le seuil limite (moins un facteur de sécurité TS (« Y étape 122), une nouvelle température de gaz d'entrée est calculée (c'est-à-dire que la température du gaz de remplissage est abaissée). Le processus revient à l'étape 11 dans laquelle la température du gaz Tin(t) est fournie au modèle.

Si en revanche cette température maximale du réservoir Twall,max(t) reste inférieure au seuil limite (moins un facteur de sécurité TS (« Y étape 121), une nouvelle température de gaz d'entrée est calculée (c'est-à-dire que la température du gaz de remplissage est augmentée). Le processus revient à l'étape 11 dans laquelle la température du gaz entrant Tin(t) est fournie au modèle.

Comme illustré schématiquement à la figure 2, lors d'un remplissage, lorsque la température du réservoir (1) calculée atteint un seuil haut (SH) déterminé, le flux et notamment le débit de gaz est diminué et/ou la température du gaz fourni au réservoir (1) est diminuée par échange thermique avec une source de froid. De même, lors d'un soutirage, lorsque la température du réservoir calculée atteint un seuil bas déterminé (SB), le flux de gaz peut être diminué.

La figure 4 illustre plus en détail une prise en compte possible du nombre de Richardson Ri.

Le nombre de Richardson Ri pour le gaz dans le réservoir 1 en fonction du temps est calculé. Le procédé comprend une étape 27 de comparaison du nombre de nombre de Richardson Ri calculé avec une valeur de référence Vr déterminée comprise entre 0,05 et 1,5 et de préférence entre 0,05 et 0,15 et notamment égale à 0,1. Lorsque nombre de Nombre de Richardson Ri calculé est inférieur à valeur de référence Vr (étape 127) déterminée, la température du gaz dans le réservoir 1 est considérée homogène c'est-à-dire que la température maximale atteinte par la paroi du réservoir Twall,max(t) en fonction du temps est considérée égale à la température moyenne de la paroi du réservoir Twall,average(r,t) en contact avec le gaz en fonction du temps (t) : Twall,max(t)= Twall,average(r,t), r étant le rayon à partir de l'axe longitudinal de symétrie du réservoir cylindrique. Au niveau de l'interface en contact avec le gaz (c'est-à-dire r=rayon au niveau de ce qui forme le « liner » du réservoir), r=rayon du liner.

Lorsque le nombre de Nombre de Richardson Ri calculé est supérieure à valeur de référence Vr déterminée, la température du gaz dans le réservoir 1 est considérée hétérogène c'est-à-dire que la température maximale atteinte par la paroi du réservoir Twall,max(t) en fonction du temps n'est pas égale à la température moyenne de la paroi du réservoir Twall,average(r=rayon du liner,t) en contact avec le gaz en fonction du temps (t), et dans ces conditions, le procédé peut comporter une étape d'augmentation du débit fourni au réservoir 1 pour diminuer la valeur du Nombre de Richardson (Ri) calculé au-dessous de la valeur de référence Vr déterminée (étape 227 figure 4).

Un exemple non limitatif de modèle de calcul de la température moyenne du gaz dans le réservoir Tgas,average(t) et de la température extrême Twall,max(t) (maximale ou minimale) de la paroi du réservoir va être décrit à présent.

Ledit modèle peut être basé sur :

- un bilan de masse et d'énergie du gaz dans le réservoir 1,
- une équation d'état du gaz,
- des corrélations avec des coefficients sans dimension modélisant les échanges de chaleur entre le gaz et la paroi du réservoir, et entre la paroi du réservoir et l'environnement extérieur
- une équation de chaleur à une dimension dans la paroi du réservoir,
- une corrélation entre la température maximale de la paroi du réservoir en fonction du temps et la température moyenne du gaz et de la paroi en contact avec le gaz en fonction du temps. Cette corrélation peut être obtenue par des essais et/ou des simulations.

On pourra se référer par exemple au document WO2013014346A1 (ou l'article « Evaluating the temperature inside a tank during a filling with highly-pressurized gas », publié en 2014, auteurs: Thomas Bourgeois and al. Seoul (Korea) : Proceedings of the 20th World Hydrogen Energy Conférence, 2014.

Des détails de calcul dudit modèle vont être décrits ci-dessous. Par soucis de simplification, le réservoir est considéré rempli par du gaz. Cependant, l'adaptation du modèle au cas d'un soutirage ou d'une stabilisation (ni remplissage ni soutirage) sera décrite après.

Le modèle combine les bilans de masse et d'énergie du gaz et de l'équation d'état du gaz.

Pour un remplissage, la température et la pression du gaz dans le réservoir sont considérées homogènes. Le gaz entrant dans le réservoir 1 possède une enthalpie $h_{in}$ et le gaz dans le réservoir est considéré échanger de la chaleur avec la paroi via un coefficient d'échange thermique $k_g$. La masse de gaz dans le réservoir est considérée varier directement selon le débit de gaz entrant.

Dans ce cas,

$$\frac{dm}{dt} = \dot{m}_{in}$$

Dans la suite, la variation de masse en fonction du temps sera appelée

$$\frac{dm}{dt} = \dot{m}_{in} = \dot{m}.$$

La première équation d'énergie du modèle et le bilan d'enthalpie sont appliqués au système ouvert de l'intérieur du réservoir 1. On néglige l'énergie cinétique et les variations d'énergie gravitationnelle. En connaissant le volume V du réservoir, la surface interne $S_{int}$ du réservoir et l'enthalpie spécifique du gaz on a l'expression :

$$m\frac{dh}{dt} = V\frac{dP}{dt} + k_g S_{int}(T_{wi} - T) + \dot{m}(h_{in} - h) \quad \text{(expression 1)}$$

Avec ces hypothèses, les variations de l'enthalpie sont dues à trois facteurs : la compression du gaz, l'enthalpie entrant, et les échanges de chaleur avec la paroi. La seconde équation d'énergie est la définition de la variation d'enthalpie d'un gaz réel :

$$dh = c_p dT + (1 - \beta T)\frac{dP}{\rho} \quad \text{(expression 2)}$$

En combinant les expressions 1 et 2 on obtient une équation décrivant l'évolution de la température du gaz dans le réservoir en fonction de l'augmentation de pression, de la température de la paroi, du débit de gaz et de l'enthalpie du gaz entrant.

$$m c_p \frac{dT}{dt} = V\beta T \frac{dP}{dt} + k_g S_i(T_{wi} - T) + \dot{m}(h_e - h) \quad \text{(expression 3)}$$

Pour compléter le modèle, l'équation suivante d'état d'un gaz réel peut être utilisée :

$$P V = n R Z(T,P) T \quad \text{(expression 4)}$$

Pour estimer l'évolution de la température du gaz le système d'équations peut être discrétisé en considérant que certaines dérivées peuvent être calculée comme des variations et que certaines variables à l'instant t sont proches des valeurs à l'instant (t-1) précédent.
Des paramètres thermodynamiques Cp, $\beta$, h et Z peuvent être estimés pour chaque pression et température en utilisant les tables du standard NIST.
A ce stade deux discrétisations peuvent être faites selon le choix des paramètres d'entrée : débit massique Q(t), ou pression du gaz P(t). Le terme « paramètre d'entrée » désigne une variable est connue soit par sa mesure (exemple la pression mesurée dans le conduit de remplissage/soutirage) soit connue car renseignée dans le modèle (par exemple une augmentation de pression de 0,2bar par seconde).
Les paragraphes suivants concernent la discrétisation des équations dans le cas de la donnée d'entrée débit massique ou pression.
En combinant et discrétisant les expressions 3 et 4 on obtient :

$$T_t = T_{t-1}\frac{1 - \frac{m_{t-1}}{m_t}A_{t-1}}{1 - A_{t-1}} + \frac{\Delta t\, k_{g\,t-1} S_{int}(T_{wi\,t-1} - T_{t-1}) + (m_t - m_{t-1})(h_{int\,t-1} - h_{t-1})}{m_t c_{p\,t-1}(1 - A_{t-1})}$$

avec,

$$m_t = m_{t-1} + Q_t \Delta t$$

avec,

$$A_{t-1} = \frac{\beta_{t-1}\, T_{t-1}\, R\, Z(T_{t-1}, P_{t-1})}{c_{p_{t-1}}\, M}$$

A partir de ces équations, en connaissant l'état au temps précédent (t-1), en plus du signal de débit Q(t) au temps t, il est possible de déterminer la température du gaz au temps t.

A partir de l'équation d'état du gaz, connaissant la pression P au temps (t-1) la température du gaz T au temps t et la masse m(t) au temps t, la pression P(t) au temps t peut être calculée.

Avec les notations suivantes :

$$A = \frac{V\beta_{t-1}T_{t-1}(P_t - P_{t-1})}{\Delta t} + k_{g_{t-1}}S_{int}\left(T_{w i_{t-1}} - T_{t-1}\right) - \frac{m_{t-1}}{\Delta t}\left(h_{int_{t-1}} - h_{t-1}\right)$$

et

$$B = \frac{P_t V M}{R Z(T_{t-1}, P_t)\Delta t}$$

Il est possible de discrétiser les équations précédentes pour obtenir l'expression de la température T à l'instant t.

$$T_t = \frac{c_{p_{t-1}}T_{t-1} + h_{int_{t-1}} - h_{t-1}}{c_{p_{t-1}} - \frac{A}{B}}$$

Ici à nouveau, en connaissant le système au temps précédent (t-1) et la valeur de pression au temps t il est possible de calculer la température du gaz au temps t.

A partir de l'équation d'état, en connaissant Tgas,average(t) et P(t) il est possible de calculer la masse de gaz dans le réservoir au temps t.

Dans le cas d'un soutirage, la température du gaz dans le réservoir peut être calculée. La seule différence avec les équations précédentes réside dans le fait que l'enthalpie à l'entrée est à présent l'enthalpie à la sortie et est considérée égale à celle du gaz dans le réservoir. Ainsi le terme ($h_{in}$-h) de l'expression est nul. La donnée d'entrée dans ce cas peut être soit la pression dans le réservoir ou le débit massique sortant.

La modélisation des échanges de chaleur est un paramètre important du modèle. Au contraire de modélisations complexes via les équations de Navier Stokes, les échanges thermiques entre le gaz et la paroi peuvent être modélisés via des corrélations basées sur des nombres sans dimension.

Dans le cas d'un remplissage de réservoir à haute pression 200bar, 700bar ou 1000bar, on préconise une corrélation basée sur les nombres de Nusselt, Rayleigh et Prandtl ($Nu_{Dint}$, $Ra_{Dint}$ and $Re_{din}$) par exemple selon la méthode décrite dans le document EP2824378A1.

L'expression est par exemple :

$$Nu_{Dint} = a\, Ra_{Dint}{}^{b} + c\, Re_{din}{}^{d}$$

Le nombre de Nusselt ($Nu_{Dint}$) est basé sur le diamètre interne du réservoir et représente les échanges de chaleur convectifs entre le gaz et la paroi. La corrélation est basée sur deux termes. Un premier terme représente la convection naturelle (basée sur le nombre de Rayleigh) tandis que le second terme représente les échanges de convection forcée et dépend du nombre de Reynolds.

Les coefficients a, b, c et d de corrélation sont supposés constants et dépendent uniquement de la géométrie du réservoir et la nature de l'écoulement de gaz en son sein.

Ce modèle peut déterminer cette expression (et donc les coefficients) par des essais. Ils sont donc supposés connus et figés pour différentes conditions de remplissage.

Dans le cas d'un soutirage l'expression peut être

$$Nu_{Dint} = a\, Ra_{Dint}{}^{b}$$

C'est-à-dire que les échanges de chaleur sont dus uniquement à la convection naturelle basée sur le nombre de Rayleigh.

Ce type de corrélation est bien connu dans la littérature.

Lorsque du vent souffle autour du réservoir, les échanges de chaleur externes entre le réservoir et son environnement peuvent être modélisés avec une équation de convection forcée entre l'air et un cylindre selon une formule du type :

$$Nu_x = \frac{k_x D_{ext}}{\lambda_{air}} = \left( \left( 0.4\, Re_{D_{ext}}{}^{0.5} + 0.06\, Re_{D_{ext}}{}^{\frac{2}{3}} \right) Pr_{air}{}^{0.4} \right)$$

Si le vent est nul le nombre de Reynolds peut être considéré nul. Il est possible de choisir une corrélation de convection libre.

La modélisation du gaz, des échanges de chaleur entre le gaz et la paroi ont ainsi été explicités, le principe du modèle calculant l'évolution de la température de la paroi va à présent être décrit.

Pour résoudre l'équation de chaleur dans la paroi, la paroi va être modélisée selon une dimension.

Un bilan de chaleur est réalisé dans un élément de volume élémentaire dV compris entre les portions de rayon r et r+dr (par rapport l'axe longitudinal du réservoir).

Ce volume élémentaire est un cylindre clos supposé homogène en température (T(r,t)). Ce volume élémentaire a une épaisseur homogène dr et un diamètre interne r. sa longueur interne est $L_{int}+2(r - r_{int})$ avec $L_{int}$ et $r_{int}$ étant respectivement la longueur interne et le rayon d'un cylindre équivalent à zéro dimension (« 0D »).

Les échanges de chaleur avec le volume élémentaire et à travers un flux de chaleur $\bar{j}$ peut être exprimé selon la loi de Fourier $\bar{j} = -\lambda\overline{grad}T(r,t)$.

Le bilan de chaleur dans le volume élémentaire peut être exprimé comme suit :

$$\rho c_p dV \frac{\partial T}{\partial t} = -\lambda_r \frac{\partial T}{\partial r}\bigg|_r S_r + \lambda_{r+dr} \frac{\partial T}{\partial r}\bigg|_{r+dr} S_{r+dr}$$

A l'interface entre le gaz et la paroi interne (liner) on considère une continuité de la puissance au temps $t + \Delta t$.

Par conséquent :

$$P = k_g(t+\Delta t)\, A_{int}\left( T_{gas}(t+\Delta t) - T(r_{liner}, t+\Delta t) \right) = \int_{A_{int}} -\lambda(r_{liner}, t+\Delta t)\, \overline{grad}T \cdot \bar{n}\, dA$$

$$= \int_{A_{int}} -\lambda(r_{liner}, t+\Delta t)\, \frac{\partial T}{\partial r}\, dA$$

Au niveau de l'interface entre le composite et le liner on considère une égalité des flux (indice « w » pour le flux dans un sens, par exemple ouest, et indice « e » pour le sens opposé).

$$-\lambda(r_w, t+\Delta t)\left( \frac{\partial T}{\partial r} \right)_w = -\lambda(r_e, t+\Delta t)\left( \frac{\partial T}{\partial r} \right)_e$$

On considère un unique point de température pour cette interface entre le composite et le liner exprimée par $T(r_{LC}, t)$.

Au niveau de l'interface avec l'environnement on a l'expression :

$$-\lambda(r_w, t + \Delta t)\left(\frac{\partial T}{\partial r}\right)_w = k_a(t + \Delta t)(T(D_{ext}, t + \Delta t) - T_{amb}) + \epsilon\sigma\left(T(D_{ext}, t + \Delta t)^4 - T_{amb}{}^4\right)$$

Le terme de gauche représente le flux dans le réservoir tandis que le terme de droite est le flux en dehors du réservoir, à la surface du réservoir.

La discrétisation des équations de paroi à une dimension a été décrite précédemment avec la discrétisation à zéro dimension de la masse de gaz et le bilan d'énergie. De plus la corrélation précédemment décrite des flux de chaleur avec la paroi permet de déterminer (calculer) les valeurs de température moyenne du gaz en fonction du temps Tgas,average(t) et de température moyenne de la paroi du réservoir Twall,average(r,t).

A partir ce là, le dispositif doit déterminer la température maximale de la paroi Twall,max(t).

Pour cela le procédé utilise une corrélation entre la température moyenne de la paroi du réservoir Twall,average(r,t) et la température maximale de la paroi Twall,max(t).

Les hétérogénéités de température dans le réservoir et la paroi sont considérées dépendre essentiellement des débits et vitesses de gaz. Une corrélation possible a la forme suivante :

$$T_{wall,max}(t) = f\left(T_{wall,average}(r_{int}, t), T_{gas,average}(t), \frac{L}{D}, \frac{D}{d}, m\right)$$

Pour déterminer cette corrélation (fonction f) des expérimentations (remplissages, soutirages) peuvent être réalisées en mesurant les températures de gaz et les températures obtenues au niveau de la paroi. Des simulations à deux ou trois dimensions peuvent permettre de calculer les points chauds/froids pendant le remplissage/soutirage.

A partir de mesures expérimentales il a été observé que le nombre de Richardson est très utile pour déterminer les conditions d'homogénéité ou d'hétérogénéité de la température dans le réservoir.

Le nombre de Richardson est donné par

$$Ri = \frac{Gr}{Re^2}$$

Avec

$$Gr = \frac{g\beta_g \left|T_g - T_{wi}\right| D_{int}{}^3}{v_g^2}$$

Le nombre de Reynolds peut être écrit de la façon suivante :

$$Re_{d_{in}} = \frac{\rho_{in} V_{in} d_{in}}{\mu_g}$$

Avec

$$v_{in} = \frac{4\dot{m}}{\Pi \mu d_{in}}$$

Ou bien

$$Re_{D_{int}} = \frac{\rho_g V_{bottom} D_{int}}{\mu_g}$$

Avec

$$V_{bottom} = 6.2 \frac{d_{in}}{L_{int}} v_{in}$$

Cette expression est dépendante du temps t et peut être calculée à chaque étape par le modèle. Le nombre de Richardson calculé peut être comparé à une valeur de référence Vr.

Ceci permet d'indiquer le niveau d'homogénéité pendant le processus de remplissage/soutirage.

Pour des réservoirs de forme générale cylindrique avec un ratio L/D (Longueur L sur diamètre D) inférieur à 4,5 (L/D<4,5), la valeur de référence peut être de l'ordre de 1.

Ri<1 indique des conditions d'homogénéité et Ri>1 indique des conditions non homogènes.

Pendant le transfert de gaz les conditions de transfert peuvent être adaptées pour maintenir les conditions d'homogénéité. Dans ces conditions d'homogénéité, la température maximale atteinte par la paroi du réservoir Twall,max(t) est la température moyenne de la paroi en contact avec le gaz. Aucune corrélation n'est nécessaire dans ce cas entre les température moyenne de paroi en contact avec le gaz et maximale de paroi.

Pour des réservoirs dans lesquels le ratio L/D>4,5 les conditions d'hétérogénéité peuvent être considérées toujours présentes. Une corrélation est dans ce cas nécessaire.

Ce procédé (calcul) peut être appliqué pendant le transfert de gaz dans une station de remplissage/soutirage. Bien entendu, ces calculs peuvent être réalisés a priori pour chaque type de réservoir pour préétablir les conditions optimales de transfert de gaz.

Des simulations peuvent notamment être faites pour déterminer des vitesses de remplissages différentes et les profils de température obtenus. De cette façon, il est possible de déterminer les conditions optimales de remplissage au préalable (vitesse, débit, refroidissement).

L'invention s'applique aussi bien au remplissage pour contrôler l'échauffement du réservoir qu'au soutirage pour contrôler le refroidissement du réservoir.

**Nomenclature et unités des termes utilisés**

$A$      surface ($m^2$)

$a$      Conductivité thermique ($m^2.s^{-1}$)

$c_p$      Chaleur massique du gaz à pression constante ($J.kg^{-1}.K^{-1}$)

$c_v$      Chaleur massique du gaz à volume constant ($J.kg^{-1}.K^{-1}$)

$d$      Diamètre de l'injecteur de gaz dans le réservoir (m)

$D$      Diamètre du reservoir (m)

$e$      Épaisseur (m)

$g$      Accélération due à la gravité ($m.s^{-2}$)

$h$      Enthalpie spécifique ($J.kg^{-1}$)

$k$      Coefficient d'échange de chaleur ($W.m^{-2}.K^{-1}$)

$L$      Longueur du reservoir (m)

$m$      Masse dans le réservoir (kg)

$m$      Débit massique dans le réservoir (également « $Q''$ ») ($kg.s^{-1}$)

$M$      Masse molaire du gaz utilisé ($kg.mol^{-1}$)

$P$      Pression du gaz (Pa)

$P_0$      Pression atmosphérique (Pa)

$q$      Flux de chaleur ($J.s^{-1}.m^{-2}$)

r      Rayon, coordonnée dans la paroi du réservoir à partir de l'axe longitudinal (m)

$R$      Constante des gaz parfaits ($J.mol^{-1}.K^{-1}$)

$S$      Surface du reservoir ($m^2$)

$t$      Temps (s)

$T$      Température (K)

$T_{fe}$      Température de l'air au contact de la paroi extérieure du réservoir (K)

$T_{fi}$      Température du gaz en contact avec la paroi interne du réservoir (K)

$T_{we}$      Température de la paroi en contact avec l'air (K)

$T_{wi}$      Température de la paroi en contact avec le gaz (K)

$V$      Volume du reservoir ($m^3$)

$V_m$      Volume molaire ($m^3.mol^{-1}$)

$v$      Volume spécifique ($m^3.kg^{-1}$)

$Z$      Facteur de compressibilité du gaz utilise dans l'équation des gaz réels (sans dimension)

$\beta$      Coefficient d'expansion thermique ($K^{-1}$)

$\gamma$      Rapport de chaleurs massiques $c_P / c_V$.

$\varepsilon$      Emissivité de la surface externe du réservoir (sans dimension)

$\lambda$      Conductivité thermique (W.m-1.K-1)

$\mu$      Viscosité dynamique (Pa.s)

$\mu_{JT}$      Coefficient Joule-Thomson du gaz (K.Pa$^{-1}$) 3

$\rho$      Densité (kg.m$^-$)

$\omega$      Vitesse du gaz (m.s $^{-1}$)

## Signification des indices

*air*      Air

*amb*      Ambiant

*comp*      Propriété relative au composite

*ext*      Paroi externe

*f*      Final

*g*      Gaz

*in*      Propriété ou nature au niveau de l'entrée du réservoir

*int*      Interne

*liner*      Propriété de l'enveloppe interne (liner) du reservoir

*0*      Initial

*w*      Propriété de la paroi

## Paramètre sans dimension

$Nu_g$      Nombre de Nusselt du gaz, $\quad Nu_g = \dfrac{k_g D_{int}}{\lambda}$

$Nu_{air}$      Nombre de Nusselt de l'air,

$$Nu_{air} = \frac{k_a D_{ext}}{\lambda_{air}}$$

$Ra_{Dint}$      Nombre de Rayleigh du gaz

$Ra_{Dext}$      Nombre de Rayleigh de l'ambiant

$Re_{din}$      Nombre de Reynolds du flux

$Re_{Dext}$      Nombre de Reynolds de l'air

$Pr_{air}$      Nombre de Prandtl de l'air,

$$Pr_{air} = \frac{\mu_{air}\, c_{p_{air}}}{\lambda_{air}}$$

## Revendications

**1.** Procédé de remplissage ou de soutirage d'un réservoir (1) de gaz sous pression, notamment de carburant tel que de l'hydrogène gazeux, le réservoir étant délimité par une paroi de forme générale cylindrique ayant un axe longitudinal et des dimensions et des propriétés thermo-physiques déterminées et connues, le procédé comprenant une régulation du débit du flux de gaz introduit ou, respectivement du gaz soutiré, et/ou de la température dudit gaz introduit, pour éviter que le réservoir n'atteigne un seuil haut déterminé de température ou un seuil bas déterminé de température, le procédé étant **caractérisé en ce qu'**il comprend une étape d'estimation en temps réel par calcul d'au moins une température du réservoir parmi : la température moyenne de la paroi du réservoir Twall,average(r,t) en fonction du temps (t) et r étant la coordonnée de rayon à partir de l'axe longitudinal du réservoir, la température maximale atteinte par la paroi du réservoir Twall,max(t) en fonction du temps, la température minimale atteinte par la paroi du réservoir Twall,min(t) en fonction du temps et **en ce que**, la régulation du débit du flux de gaz ou de la température dudit gaz est réalisée en fonction de ladite température du réservoir calculée.

2. Procédé selon la revendication 1, **caractérisé en ce que**, lors d'un remplissage, lorsque la température du réservoir (1) calculée atteint un seuil haut (SH) déterminé, le flux et notamment le débit de gaz est diminué et/ou la température du gaz fourni au réservoir (1) est diminuée par échange thermique avec une source de froid.

3. Procédé selon la revendication 2, **caractérisé en ce que**, lors d'un remplissage, lorsque la température du réservoir calculée est inférieure au seuil haut (SH) d'une valeur déterminée, le flux de gaz et notamment son débit est augmenté et/ou la température dudit gaz et/ou du réservoir est augmentée par échange thermique avec une source de chaleur.

4. Procédé selon l'une quelconque des revendications 1 à 3 **caractérisé en ce qu'**il comprend une étape de calcul du Nombre de Richardson (Ri) pour le gaz dans le réservoir (1) en fonction du temps, une étape de comparaison du Nombre de Richardson (Ri) calculé avec une valeur de référence (Vr) déterminée comprise entre 0,05 et 1,5 et de préférence entre 0,05 et 0,15 et, lorsque le Nombre de Richardson (Ri) calculé est inférieur à valeur de référence (Vr) déterminée le température du gaz dans le réservoir (1) est considérée homogène c'est-à-dire que la température maximale atteinte par la paroi du réservoir Twall,max(t) en fonction du temps est égale à la température moyenne de la paroi du réservoir Twall,average(r,t) en contact avec le gaz en fonction du temps (t) : Twall,max(t)= Twall,average(r=r_liner,t).

5. Procédé selon la revendication 4, **caractérisé en ce que**, lors d'un remplissage, lorsque le Nombre de Richardson (Ri) est supérieur à la valeur de référence (Vr), le flux de gaz et notamment son débit est augmenté.

6. Procédé selon la revendication 4 ou 5 dans lequel est réalisée une étape de régulation du débit de flux de gaz introduit dans le réservoir **caractérisé en ce que** lorsque le nombre de Nombre de Richardson (Ri) calculé est supérieure à valeur de référence (Vr) déterminée, la température du gaz dans le réservoir (1) est considérée hétérogène c'est-à-dire que la température maximale atteinte par la paroi du réservoir Twall,max(t) en fonction du temps n'est pas égale à la température moyenne de la paroi du réservoir en contact avec le gaz en fonction du temps (t) c'est-à-dire au niveau de ce qui forme le « liner » du réservoir, Twall,average(r= rayon du liner du réservoir, t), et dans ces conditions, le procédé comporte une étape d'augmentation du débit de gaz fourni au réservoir (1) pour diminuer la valeur du Nombre de Richardson (Ri) calculé au-dessous de la valeur de référence (Vr) déterminée et rendre ainsi le gaz homogène en température.

7. Procédé selon l'une quelconque des revendications 4 à 6, **caractérisé en ce qu'**il comprend, avant remplissage une étape de détermination ou de détection par capteur(s), de la température initiale T(0) du gaz dans le réservoir (1), de la pression initiale P(0) du gaz dans le réservoir (1), de la température moyenne initiale de la paroi du réservoir $T_{w, average}(0)$ et une étape de détermination de la masse de gaz initiale dans le réservoir m(0) puis, lors d'un remplissage lorsque le Nombre de Richardson (Ri) calculé est inférieure à valeur de référence (Vr) déterminée le température du gaz dans le réservoir (1) est considérée homogène, c'est-à-dire que la température maximale atteinte par la paroi du réservoir Twall,max(t) en fonction du temps est égale à la température moyenne de la paroi du réservoir Twall,average(r= r=rayon du liner du réservoir,t) en contact avec le gaz en fonction du temps (t), et dans ces conditions, le procédé comporte, au cours du remplissage, une étape de calcul de la température Tgas,average(t) moyenne du gaz dans le réservoir (1) en temps réel en fonction du temps et de la température moyenne de la paroi Twall,average(r,t) en temps réel en fonction du temps (t) à partir d'un bilan de masse et d'enthalpie appliqué au gaz dans le réservoir (1) et à partir également d'un bilan d'énergie dans la paroi du réservoir, de l'équation d'état du gaz (notamment équation des gaz réels), et d'un bilan des échanges thermiques entre le gaz et la paroi, et entre la paroi du réservoir est l'extérieur, et/ou lorsque le Nombre de Richardson (Ri) calculé est supérieure à valeur de référence (Vr) déterminée la température du gaz dans le réservoir (1) est considérée hétérogène c'est-à-dire que la température maximale atteinte par la paroi du réservoir Twall,max(t) en fonction du temps n'est pas égale à la température moyenne de la paroi du réservoir Twall,average(r)=r_liner,t) en contact avec le gaz en fonction du temps (t), et dans ces conditions, le procédé comporte, au cours du remplissage, une étape de calcul de la température Tgas,average(t) moyenne du gaz dans le réservoir (1) en temps réel en fonction du temps (t) et de la température moyenne de la paroi Twall,average(r,t) en temps réel en fonction du temps à partir d'un bilan de masse et d'enthalpie appliqué au gaz dans le réservoir (1) et d'un bilan d'énergie dans la paroi du réservoir, de l'équation d'état du gaz (équation des gaz parfaits ou réels), et d'un bilan des échanges thermiques entre la paroi du réservoir est l'extérieur et **en ce que** le procédé comprend une étape de calcul de la température maximale atteinte par la paroi du réservoir Twall,max(t) en fonction du temps, cette température maximale atteinte par la paroi du réservoir Twall,max(t) en fonction du temps étant obtenue par corrélation à partir de la température Tgas,average(t) moyenne du gaz dans le réservoir (1) calculée en temps réel en fonction du temps et en fonction de la température moyenne de la paroi Twall,average(r,t) en temps réel en fonction du temps (t).

8. Procédé selon la revendication 7, **caractérisé en ce qu'**il comprend une étape de calcul de l'enthalpie hin(t) du gaz entrant ou sortant du réservoir (1) en fonction du temps, une étape de mesure ou de calcul de la masse de gaz m(t) introduite ou soutiré du réservoir en fonction du temps ou, respectivement, une étape de détermination de la pression P(t) dans le réservoir (1) en fonction du temps, le procédé comprenant une étape de détermination de la température moyenne du gaz Tgas,average(t) à l'instant t dans le réservoir (1) en degré K, cette température moyenne Tgas,average(t) étant exprimée comme une fonction du premier degré de la température moyenne du gaz T(t-1) à l'instant précédent (t-1) et d'un coefficient d'échange chaleur convectif entre le gaz et la paroi interne du réservoir (1) à l'instant (t-1) en $W.m^{-2.K-1,}$ dans lequel le coefficient d'échange chaleur $k_g(t-1)$ est donné par la relation $k_g=(\lambda g/Dint).Nuint$ dans laquelle $\lambda g$ est la conductivité thermique du gaz dans le réservoir en $W.m^{-1.K-1,}$ Dint est le diamètre interne du réservoir (1) en mètre et NuDint le nombre de Nusselt du gaz dans le réservoir (1) (sans dimension), et dans lequel le nombre de Nusselt du gaz est exprimé en fonction du nombre de Reynolds (Redin) (sans dimension) relatif à la convection forcée dans le réservoir (1) et du nombre de Rayleigh (RaDint) (sans dimension) relatif à la convection naturelle interne dans le réservoir (1) selon une formule $NuDint= a.RaDint^{b\,+}$ $c.Redin^d$ dans laquelle a et c sont des coefficients sans dimension fonction du rapport (Lint/Dint) entre la longueur interne du réservoir Lint en mètre et le diamètre interne du réservoir Dint en mètre et du rapport (Dint/di) entre le diamètre interne du réservoir Dint en mètre et le diamètre de l'injecteur di en mètre, a, b, c et d étant des nombres réels positifs sans dimension, a étant compris entre 0 et 1, b étant compris entre 0,2 et 0,5, c étant compris entre 0 et 1 et d étant compris entre 0.5 et 0.9.

9. Procédé selon l'une quelconque des revendications 7 ou 8, **caractérisé en ce qu'**il comprend une étape d'estimation de la température maximale atteinte dans l'épaisseur du réservoir Twall,max(t) en fonction du temps, ou respectivement la température minimale atteinte dans l'épaisseur du réservoir Twall,min(t) en fonction du temps, à partir de la température Tgas,average(t) moyenne du gaz dans le réservoir (1) calculée en temps réel en fonction du temps (t), ladite température maximale ou minimale étant obtenue à partir de tableau(x) de correspondance obtenu(s) par des expérimentations, et/ou à partir de calcul et/ou de simulations de sorte qu'à une température Tgas,average(t) moyenne du gaz dans le réservoir (1) calculée en temps réel en fonction du temps (t) correspond, selon les conditions connues de débit de gaz, du diamètre d'injecteur de gaz dans le réservoir et des dimensions et caractéristiques du réservoir (1), une température maximale ou, respectivement minimale, dans l'épaisseur du réservoir en fonction du temps.

10. Procédé selon l'une quelconque des revendications 4 à 8, **caractérisé en ce que** le Nombre de Richardson (Ri) pour le gaz dans le réservoir (1) en fonction du temps est calculé à partir du nombre de Grashoff (Gr) pour le gaz et du nombre de Reynolds (Re) pour le gaz au temps (t) selon la formule suivante : $Ri= Gr/Re^2$, dans lequel les nombres de Grashof (Gr) et de Reynolds (Re) sont des données connues ou calculées à partir de la valeur de pression du gaz mesurée ou de la masse de gaz dans le réservoir et de la température du gaz Tgas,average(t) moyenne du gaz dans le réservoir (1).

11. Procédé selon l'une quelconque des revendications 1 ou 4, **caractérisé en ce que**, lors d'un soutirage, lorsque la température du réservoir calculée atteint un seuil bas déterminé (SB), le flux de gaz est diminué.

12. Procédé selon l'une quelconque des revendications 1 à 11, **caractérisé en ce qu'**il comprend une étape de mesure ou de calcul en continu de l'un au moins parmi : la pression Pin(t) au temps (t) du gaz introduit dans ou soutiré du réservoir, la température Tin(t) au temps (t) du gaz introduit dans ou soutiré du réservoir, la P(t) pression dans le réservoir au temps (t), la température ambiante Tamb(t) au temps (t), la masse de gaz m(t) dans le réservoir (1) au temps (t).

13. Procédé selon l'une quelconque des revendications 1 à 10, **caractérisé en ce qu'**il est mis en oeuvre par une station de remplissage de réservoirs de gaz hydrogène comprenant au moins une source (10) d'hydrogène à haute pression, au moins une conduite (2) de transfert de gaz reliant sélectivement la source (10) à un réservoir (1), et un organe (4) électronique d'acquisition, de stockage et de traitement de données tel qu'un ordinateur ou microprocesseur, ledit organe (4) pilotant le transfert de gaz entre la source (10) et le réservoir (1), **caractérisé en ce que** la logique (4) électronique est programmée pour calculer en temps réel au moins une température du réservoir (1) parmi : la température moyenne de la paroi du réservoir Twall,average(r,t) en fonction du temps (t), la température maximale atteinte dans l'épaisseur du réservoir Twall,max(t) en fonction du temps, la température minimale atteinte dans l'épaisseur du réservoir Twall,min(t) en fonction du temps et pour réguler le débit du flux de gaz et/ou de la température dudit gaz en fonction de ladite température du réservoir calculée.

14. Dispositif de remplissage ou de soutirage de gaz d'un réservoir (1) comprenant une conduite (2) de transfert comprenant une vanne (3) et raccordable à un réservoir (1), le dispositif comprenant un organe (4) électronique d'acquisition, de stockage et de traitement de données tel qu'un ordinateur ou microprocesseur, ledit organe (4) pilotant le transfert de gaz entre la source (10) et le réservoir (1), **caractérisé en ce que** la logique (4) électronique est programmée pour calculer au moins une température du réservoir (1) parmi : la température moyenne de la paroi du réservoir Twall,average(r,t) selon son épaisseur (rayon r) et en fonction du temps (t), la température maximale atteinte dans l'épaisseur du réservoir Twall,max(t) en fonction du temps, la température minimale atteinte dans l'épaisseur du réservoir Twall,min(t) en fonction du temps et pour réguler le débit du flux de gaz en fonction de ladite température du réservoir courante calculée.

**Patentansprüche**

1. Verfahren zur Befüllung oder Entnahme von Druckgas aus einem Behälter (1), insbesondere von Kraftstoff wie gasförmigen Wasserstoff, wobei der Behälter durch eine im Allgemeinen zylindrisch geformte Wand begrenzt ist, welche eine Längsachse und bestimmte und bekannte Abmessungen und thermophysikalische Eigenschaften aufweist, wobei das Verfahren eine Regulierung des Strömungsdurchsatzes von eingeleitetem Gas bzw. von entnommenem Gas und/oder der Temperatur des eingeleiteten Gases umfasst, um zu verhindern, dass der Behälter einen bestimmten hohen Temperaturschwellenwert oder einen bestimmten niedrigen Temperaturschwellenwert erreicht, wobei das Verfahren **dadurch gekennzeichnet ist, dass** es einen Schritt zur Schätzung in Echtzeit durch Berechnen mindestens einer Temperatur des Behälters umfasst, aus: der Durchschnittstemperatur der Wand des Behälters TWand,Durchschnitt(r,t) in Abhängigkeit von der Zeit (t) und wobei r die Radiuskoordinate aus der Längsachse des Behälters ist, der maximalen Temperatur, die von der Wand des Behälters TWand,max(t) in Abhängigkeit von der Zeit erreicht wird, der minimalen Temperatur, die von der Wand des Behälters TWand,min(t) in Abhängigkeit von der Zeit erreicht wird und dadurch, dass die Regulierung des Gasströmungsdurchsatzes oder der Temperatur des Gases in Abhängigkeit von der berechneten Temperatur des Behälters durchgeführt wird.

2. Verfahren nach Anspruch 1, **dadurch gekennzeichnet, dass** während einer Befüllung, wenn die berechnete Temperatur des Behälters (1) einen bestimmten hohen Schwellenwert (SH) erreicht, die Strömung und insbesondere der Gasdurchsatz reduziert wird und/oder die Temperatur des dem Behälter (1) zugeführten Gases durch Wärmeaustausch mit einer Kältequelle reduziert wird.

3. Verfahren nach Anspruch 2, **dadurch gekennzeichnet, dass** während einer Befüllung, wenn die berechnete Temperatur des Behälters unter dem hohen Schwellenwert (SH) eines bestimmten Wertes liegt, die Gasströmung und insbesondere dessen Durchsatz erhöht wird und/oder die Temperatur des Gases und/oder des Behälters durch Wärmeaustausch mit einer Wärmequelle erhöht wird.

4. Verfahren nach einem der Ansprüche 1 bis 3, **dadurch gekennzeichnet, dass** es einen Berechnungsschritt der Richardson-Zahl (Ri) für das Gas in dem Behälter (1) in Abhängigkeit von der Zeit, einen Vergleichsschritt der berechneten Richardson-Zahl (Ri) mit einem bestimmten Referenzwert (Vr) zwischen 0,05 und 1,5 und bevorzugt zwischen 0,05 und 0,15 umfasst, und, wenn die berechnete Richardson-Zahl (Ri) kleiner als der bestimmte Referenzwert (Vr) ist, die Temperatur des Gases in dem Behälter (1) als homogen angesehen wird, das heißt, dass die von der Wand des Behälters TWand,max(t) in Abhängigkeit von der Zeit erreichte maximale Temperatur gleich der Durchschnittstemperatur der Wand des Behälters TWand,Durchschnitt(r,t) in Kontakt mit dem Gas in Abhängigkeit von der Zeit (t):TWand,max(t)=TWand,Durchschnitt(r=r_Liner,t) ist.

5. Verfahren nach Anspruch 4, **dadurch gekennzeichnet, dass**, wenn die Richardson-Zahl (Ri) während einer Befüllung größer als der Referenzwert (Vr) ist, die Gasströmung und insbesondere dessen Durchsatz erhöht wird.

6. Verfahren nach Anspruch 4 oder 5, wobei ein Schritt zur Regulierung des Durchsatzes der in den Behälter eingeleiteten Gasströmung durchgeführt wird, **dadurch gekennzeichnet, dass**, wenn die Zahl der berechneten Richardson-Zahl (Ri) größer als der bestimmte Referenzwert (Vr) ist, die Temperatur des Gases im Behälter (1) als heterogen angesehen wird, das heißt, dass die von der Wand des Behälters TWand,max(t) in Abhängigkeit von der Zeit erreichte maximale Temperatur nicht gleich der Durchschnittstemperatur der Wand des Behälters in Kontakt mit dem Gas in Abhängigkeit von der Zeit (t) ist, das heißt, dass auf der Ebene dessen, was den "Liner" des Behälters, TWand,Durchschnitt(r= Radius des Liners des Behälters, t) bildet, und unter diesen Bedingungen das Verfahren einen Schritt der Erhöhung des dem Behälter (1) zugeführten Gasdurchsatzes umfasst, um den Wert der berechneten Richardson-Zahl (Ri) unter den bestimmten Referenzwert (Vr) zu verringern, und so das Gas in der Temperatur homogen zu machen.

7. Verfahren nach einem der Ansprüche 4 bis 6, **dadurch gekennzeichnet, dass** es vor der Befüllung einen Schritt zur Bestimmung oder Erfassung mittels Sensor(en) der Anfangstemperatur T(0) des Gases im Behälter (1), des Anfangsdrucks P(0) des Gases im Behälter (1), der Anfangsdurchschnittstemperatur der Wand des Behälters $T_{w,Durchschnitt}(0)$ und einen Schritt zur Bestimmung der Anfangsgasmasse im Behälter m(0) umfasst, wenn dann, während einer Befüllung, die berechnete Richardson-Zahl (Ri) kleiner als der bestimmte Referenzwert (Vr) ist, die Gastemperatur im Behälter (1) als homogen angesehen wird, das heißt, dass die von der Wand des Behälters TWand,max(t) erreichte maximale Temperatur in Abhängigkeit von der Zeit gleich der Durchschnittstemperatur der Wand des Behälters TWand,Durchschnitt(r= r=Radius des Liners des Behälters,t) in Kontakt mit dem Gas in Abhängigkeit von der Zeit (t) ist, und unter diesen Bedingungen das Verfahren während der Befüllung einen Schritt zur Berechnung der Durchschnittstemperatur TGas,Durschnitt(t) des Gases im Behälter (1) in Echtzeit in Abhängigkeit von der Zeit und der Durchschnittstemperatur der Wand TWand,Durchschnitt(r,t) in Echtzeit in Abhängigkeit von der Zeit (t) aus einer auf das Gas im Behälter (1) angewendeten Massen- und Enthalpiebilanz und auch aus einer Energiebilanz in der Behälterwand, der Gaszustandsgleichung (insbesondere der Ist-Gasgleichung) und einer Wärmeaustauschbilanz zwischen dem Gas und der Wand, und zwischen der Wand des Behälters ist die Außenseite umfasst, und/oder wenn die berechnete Richardson-Zahl (Ri) größer als der bestimmte Referenzwert (Vr) ist, die Temperatur des Gases im Behälter (1) als heterogen angesehen wird, das heißt, dass die von der Wand des Behälters TWand,max(t) erreichte maximale Temperatur in Abhängigkeit von der Zeit nicht gleich der Durchschnittstemperatur der Wand des Behälters TWand,Durchschnitt(r)=r_Liner,t) in Kontakt mit dem Gas in Abhängigkeit von der Zeit (t) ist, und unter diesen Bedingungen das Verfahren während der Befüllung einen Schritt zur Berechnung der Durchschnittstemperatur TGas,Durschnitt(t) des Gases im Behälter (1) in Echtzeit in Abhängigkeit von der Zeit (t) und der Durchschnittstemperatur der Wand TWand,Durchschnitt(r,t) in Echtzeit in Abhängigkeit von der Zeit aus einer auf das Gas im Behälter (1) angewendeten Massen- und Enthalpiebilanz und einer Energiebilanz in der Wand des Behälters, der Gaszustandsgleichung (Soll- oder Ist-Gasgleichung), und einer Wärmeaustauschbilanz zwischen der Wand des Behälters ist die Außenseite umfasst, und dadurch, dass das Verfahren einen Schritt zur Berechnung der maximalen Temperatur umfasst, die von der Wand des Behälters TWand,max(t) in Abhängigkeit von der Zeit erreicht wird, wobei diese maximale Temperatur, die von der Wand des Behälters TWand,max(t) in Abhängigkeit von der Zeit erreicht wird, durch Korrelation aus der Durchschnittstemperatur TGas,Durchschnitt(t) des Gases im Behälter (1) erhalten wird, die in Echtzeit in Abhängigkeit von der Zeit und in Abhängigkeit von der Durchschnittstemperatur der Wand TWand,Durchschnitt(r,t) in Echtzeit in Abhängigkeit von der Zeit (t) berechnet wird.

8. Verfahren nach Anspruch 7, **dadurch gekennzeichnet, dass** es einen Schritt zur Berechnung der Enthalpie hin(t) des in den Behälter (1) eintretenden oder daraus austretenden Gases in Abhängigkeit von der Zeit, einen Schritt zur Messung oder Berechnung der Masse des in den Behälter eingeleiteten oder daraus entnommenen Gases m(t) in Abhängigkeit von der Zeit oder jeweils einen Schritt zur Bestimmung des Drucks P(t) in dem Behälter (1) in Abhängigkeit von der Zeit umfasst, wobei das Verfahren einen Schritt zur Bestimmung der Durchschnittstemperatur des Gases TGas,Durchschnitt(t) zum Zeitpunkt t im Behälter (1) in Grad K umfasst, wobei diese Durchschnittstemperatur TGas,Durchschnitt(t) in Abhängigkeit von dem ersten Grad der Durchschnittstemperatur des Gases T(t-1) zum vorhergehenden Zeitpunkt (t-1) und eines konvektiven Wärmeaustauschkoeffizienten zwischen dem Gas und der Innenwand des Behälters (1) zum Zeitpunkt (t-1) in $W.m^{-2}K^{-1},$ angegeben wird, wobei der Wärmeaustauschkoeffizient $k_g(t-1)$ durch die Beziehung $k_g=(\lambda g/Dint).Nu_{int}$ gegeben ist, wobei $\lambda g$ die Wärmeleitfähigkeit des Gases im Behälter als $W.M^{-1.K-1}$ ist, Dint der Innendurchmesser des Behälters (1) in Metern ist und NuDint die Nußelt-Zahl des Gases im Behälter (1) (ohne Abmessung) ist, und wobei die Nußelt-Zahl des Gases in Abhängigkeit von der Reynolds-Zahl (Redin) (ohne Abmessung) relativ zur erzwungenen Konvektion im Behälter (1) und der Rayleigh-Zahl (RaDint) (ohne Abmessung) relativ zur natürlichen inneren Konvektion im Behälter (1) gemäß einer Formel NuDint=a.RaDint$^b$+c.Redin$^d$ ausgedrückt wird, wobei a und c Koeffizienten ohne Abmessung sind, in Abhängigkeit von dem Verhältnis (Lint/Dint) zwischen der Innenlänge des Behälters Lint in Metern und dem Innendurchmesser des Behälters Dint in Metern und dem Verhältnis (Dint/di) zwischen dem Innendurchmesser des Behälters Dint in Metern und dem Durchmesser des Injektors di in Metern, wobei a, b, c und d positive reelle Zahlen ohne Abmessung sind, wobei a zwischen 0 und 1 liegt, b zwischen 0,2 und 0,5 liegt, c zwischen 0 und 1 liegt und d zwischen 0,5 und 0,9 liegt.

9. Verfahren nach einem der Ansprüche 7 oder 8, **dadurch gekennzeichnet, dass** es einen Schritt zur Schätzung der maximalen Temperatur, die in der Dicke des Behälters TWand,max(t) in Abhängigkeit von der Zeit erreicht wird, oder bzw. der minimalen Temperatur, die in der Dicke des Behälters TWand,min(t) in Abhängigkeit von der Zeit erreicht wird, aus der Durchschnittstemperatur TGas,Durchschnitt(t) des Gases in dem Behälter (1) umfasst, die in Echtzeit in Abhängigkeit von der Zeit (t) berechnet wird, wobei die maximale oder minimale Temperatur aus einer oder mehreren durch Versuche erhaltenen Entsprechungstabellen und/oder aus Berechnung und/oder Simulationen erhalten wird, so dass bei einer Durchschnittstemperatur TGas,Durchschnitt(t) des Gases im Behälter (1), die in Echtzeit in Abhängigkeit von der Zeit (t) berechnet wird, gemäß den bekannten Gasdurchsatzbedingungen dem Durchmesser des Gasinjektors im Behälter und den Abmessungen und Eigenschaften des Behälters (1) eine maximale bzw. minimale Temperatur in der Dicke des Behälters in Abhängigkeit von der Zeit entspricht.

10. Verfahren nach einem der Ansprüche 4 bis 8, **dadurch gekennzeichnet, dass** die Richardson-Zahl (Ri) für das Gas im Behälter (1) in Abhängigkeit von der Zeit aus der Grashoff-Zahl (Gr) für das Gas und der Reynolds-Zahl (Re) für das Gas zum Zeitpunkt (t) gemäß der folgenden Formel berechnet wird: Ri= Gr/Re$^2$, wobei die Grashof- (Gr) und Reynolds- (Re) Zahlen als bekannt angegeben sind oder aus dem gemessenen Gasdruckwert oder der Gasmasse im Behälter und der Durchschnittstemperatur TGas,Durchschnitt(t) des Gases in dem Behälter (1) berechnet werden.

11. Verfahren nach einem der Ansprüche 1 oder 4, **dadurch gekennzeichnet, dass** während einer Entnahme, wenn die berechnete Behältertemperatur einen bestimmten niedrigen Schwellenwert (SB) erreicht, die Gasströmung reduziert wird.

12. Verfahren nach einem der Ansprüche 1 bis 11, **dadurch gekennzeichnet, dass** es einen Schritt zur kontinuierlichen Messung oder Berechnung von mindestens einem aus Folgendem umfasst: dem Druck Pin(t) zum Zeitpunkt (t) des in den Behälter eingeleiteten oder aus ihm entnommenen Gases, der Temperatur Tin(t) zum Zeitpunkt (t) des in den Behälter eingeleiteten oder aus ihm entnommenen Gases, dem Druck P(t) im Behälter zum Zeitpunkt (t), der Umgebungstemperatur Tamb(t) zum Zeitpunkt (t), der Gasmasse m(t) im Behälter (1) zum Zeitpunkt (t).

13. Verfahren nach einem der Ansprüche 1 bis 10, **dadurch gekennzeichnet, dass** es von einer Füllstation für Wasserstoffgasbehälter durchgeführt wird, die mindestens eine Wasserstoffquelle (10) mit hohem Druck, mindestens eine Gastransferleitung (2), welche die Quelle (1) selektiv mit einem Behälter (1) verbindet, umfasst, und ein elektronisches Organ (4) zum Erfassen, Speichern und Verarbeiten von Daten, wie beispielsweise einen Computer oder Mikroprozessor, wobei das Organ (4) den Gastransfer zwischen der Quelle (10) und dem Behälter (1) steuert, **dadurch gekennzeichnet, dass** die elektronische Logik (4) programmiert ist, um in Echtzeit mindestens eine Temperatur des Behälters (1) zu berechnen aus: der durchschnittlichen Wandtemperatur des Behälters TWand,Durchschnitt(r,t) in Abhängigkeit von der Zeit (t), der maximalen Temperatur, die in der Dicke des Behälters TWand,max(t) in Abhängigkeit von der Zeit erreicht wird, der minimalen Temperatur, die in der Dicke des Behälters TWand,min(t) in Abhängigkeit von der Zeit erreicht wird, und um den Durchsatz der Gasströmung und/oder die Temperatur des Gases in Abhängigkeit von der berechneten Temperatur des Behälters zu regulieren.

14. Vorrichtung zur Befüllung oder Entnahme von Gas eines Behälters (1), umfassend eine Transferleitung (2), die ein Ventil (3) umfasst und an einen Behälter (1) anschließbar ist, wobei die Vorrichtung ein elektronisches Organ (4) zum Erfassen, Speichern und Verarbeiten von Daten, wie beispielsweise einen Computer oder Mikroprozessor, umfasst, wobei das Organ (4) den Transfer von Gas zwischen der Quelle (10) und dem Behälter (1) steuert, **dadurch gekennzeichnet, dass** die elektronische Logik (4) programmiert ist, um mindestens eine Durchschnittstemperatur des Behälters (1) zu berechnen, aus: der Durchschnittstemperatur der Wand des Behälters TWand,Durchschnitt(r,t), entsprechend seiner Dicke (Radius r) und in Abhängigkeit von der Zeit (t), der maximalen Temperatur, die in der Dicke des Behälters TWand,max(t) in Abhängigkeit von der Zeit erreicht wird, der minimalen Temperatur, die in der Dicke des Behälters TWand,min(t) in Abhängigkeit von der Zeit erreicht wird, und um den Durchsatz der Gasströmung gemäß der berechneten aktuellen Temperatur des Behälters zu regulieren.

**Claims**

1. Method for filling or drawing off a pressurised gas tank (1), in particular fuel such as hydrogen gas, the tank being delimited by a wall of general cylindrical shape having a longitudinal axis and determined and known dimensions and thermophysical properties, the method comprising a regulation of the flow of the gas stream introduced or, respectively of the gas drawn off, and/or of the temperature of said gas introduced, to avoid the tank reaching a determined high temperature threshold or a determined low temperature threshold, the method being **characterised in that** it comprises a step of estimating in real time by calculating at least one temperature of the tank from among: the average temperature of the wall of the tank Twall,average(r,t) according to the time (t) and r being the radius coordinate from the longitudinal axis of the tank, the maximum temperature reached by the wall of the tank Twall,max(t) according to the time, the minimum temperature reached by the wall of the tank Twall,min(t) according to the time and **in that**, the regulation of the flow of the gas stream or of the temperature of said gas is achieved according to said temperature of tank calculated.

2. Method according to claim 1, **characterised in that**, during a filling, when the temperature of the tank (1) calculated reaches a determined high threshold (SH), the stream and in particular the gas flow is decreased and/or the temperature of the gas supplied to the tank (1) is decreased by heat exchange with a cold source.

3. Method according to claim 2, **characterised in that**, during a filling, when the temperature of the tank calculated is less than the high threshold (SH) by a determined value, the gas stream and in particular the flow thereof is increased and/or the temperature of said gas and/or of the tank is increased by heat exchange with a heat source.

4. Method according to any one of claims 1 to 3, **characterised in that** it comprises a step of calculating the Richardson Number (Ri) for the gas in the tank (1) according to the time, a step of comparing the Richardson Number (Ri) calculated with a reference value (Vr) determined of between 0.05 and 1.5 and preferably between 0.05 and 0.15 and, when the Richardson Number (Ri) calculated is less than the determined reference value (Vr), the temperature of the gas in the tank (1) is considered homogenous, i.e. that the maximum temperature reached by the wall of the tank Twall,max(t) according to the time is equal to the average temperature of the wall of the tank Twall,average(r,t) in contact with the gas according to the time (t): Twall,max(t)=Twall,average(r=r_liner,t).

5. Method according to claim 4, **characterised in that**, during a filling, when the Richardson Number (Ri) is greater than the reference value (Vr), the gas stream and in particular the flow thereof is increased.

6. Method according to claim 4 or 5, wherein is carried out a step of regulating the gas stream flow introduced in the tank, **characterised in that** when the Richardson Number (Ri) calculated is greater than the determined reference value (Vr), the temperature of the gas in the tank (1) is considered heterogenous, i.e. that the maximum temperature reached by the wall of the tank Twall,max(t) according to the time is not equal to the average temperature of the wall of the tank in contact with the gas according to the time (t), i.e. at the level of what forms the "liner" of the tank, Twall,average(r= radius of the liner of the tank, t), and under these conditions, the method comprises a step of increasing the gas stream supplied to the tank (1) to decrease the value of the Richardson Number (Ri) calculated below the determined reference value (Vr) and thus make the gas homogenous in temperature.

7. Method according to any one of claims 4 to 6, **characterised in that** it comprises, before filling, a step of determining or detecting by sensor(s), the initial temperature T(0) of the gas in the tank (1), the initial pressure P(0) of the gas in the tank (1), the initial average temperature of the wall of the tank Tw,average(0) and a step of determining the initial gas mass in the tank m(0) then, during a filling when the Richardson Number (Ri) calculated is less than the determined reference value (Vr), the temperature of the gas in the tank (1) is considered homogenous, i.e. that the maximum temperature reached by the wall of the tank Twall,max(t) according to the time is equal to the average temperature of the wall of the tank Twall,average(r= r=radius of the line of the tank,t) in contact with the gas according to the time (t), and under these conditions, the method comprises, during the filling, a step of calculating the average temperature Tgas,average(t) of the gas in the tank (1) in real time according to the time and of the average temperature of the wall Twall,average(r,t) in real time according to the time (t) from a mass balance and enthalpy applied to the gas in the tank (1) and also from an energy balance in the wall of the tank, of the status equation of the gas (in particular, real gas equation), and a thermal exchange balance between the gas and the wall, and between the wall of the tank is the outside, and/or when the Richardson Number (Ri) calculated is greater than the determined reference value (Vr), the temperature of the gas in the tank (1) is considered heterogenous, i.e. that the maximum temperature reached by the wall of the tank Twall,max(t) according to the time is not equal to the average temperature of the wall of the tank Twall,average(r)=r_liner,t) in contact with the gas according to the time (t), and under these conditions, the method comprises, during the filling, a step of calculating the average temperature Tgas,average(t) of the gas in the tank (1) in real time according to the time (t) and of the average temperature of the wall Twall,average(r,t) in real time, according to the time from a mass balance and enthalpy applied to the gas in the tank (1) and an energy balance in the wall of the tank, of the status equation of the gas (perfect or real gas equation), and a thermal exchange balance between the wall of the tank is the outside and **in that** the method comprises a step of calculating the maximum temperature reached by the wall of the tank Twall,max(t) according to the time, this maximum temperature reached by the wall of the tank Twall,max(t) according to the time being obtained by correlation from the average temperature Tgas,average(t) of the gas in the tank (1) calculated in real time according to the time and according to the average temperature of the wall Twall,average(r,t) in real time according to the time (t).

8. Method according to claim 7, **characterised in that** it comprises a step of calculating the enthalpy hin(t) of the gas entering or exiting from the tank (1) according to the time, a step of measuring or calculating the gas mass m(t) introduced or drawn off from the tank according to the time or, respectively, a step of determining the pressure P(t) in the tank (1) according to the time, the method comprising a step of determining the average temperature of the gas Tgas,average(t) at the instant t in the tank (1) in degrees K, this average temperature Tgas,average(t) being expressed as a function of the first degree of the average temperature of the gas T(t-1) at the preceding instant (t-1) and a convective eat exchange coefficient between the gas and the internal wall of the tank (1) at the instant (t-1) in $W.m^{-2.K-1}$, wherein the heat exchange coefficient $k_g(t-1)$ is given by the ratio $k_g$=(λg/Dint).Nuint wherein λg is the thermal conductivity of the gas in the tank in $W.m^{-1K-1}$·Dint is the internal diameter of the tank (1) in metres and NuDint, the Nusselt number of the gas in the tank (1) (without dimension), and wherein the Nusselt number of the gas is expressed according to the Reynolds number (Redin) (without dimension) relating to the forced convection in the tank (1) and of the Rayleigh number (RaDint) (without dimension) relating to the natural internal convection in the tank (1) according to a formula NuDint= $a.RaDint^{b}$+ $c.Redin^{d}$ in which a and c are coefficients without dimension according to the ratio (Lint/Dint) between the internal length of the tank Lint in metres and the internal diameter of the tank Dint in metres and of the ratio (Dint/di) between the internal diameter of the tank Dint in metres and the diameter of the injector di in metres, a, b, c and d being real positive numbers without dimension, a being between 0 and 1, b being between 0.2 and 0.5, c being between 0 and 1, and d being between 0.5 and 0.9.

9. Method according to any one of claims 7 or 8, **characterised in that** it comprises a step of estimating the maximum temperature reached in the thickness of the tank Twall,max(t) according to the time, or respectively the minimum temperature reached in the thickness of the tank Twall,min(t) according to the time, from the average temperature Tgas,average(t) of the gas in the tank (1) calculated in real time according to the time (t), said maximum or minimum temperature being obtained from correspondence table(s) obtained by experiments, and/or from the calculation and/or simulations such that at an average temperature Tgas,average(t) of the gas in the tank (1) calculated in real time according to the time (t) corresponds, according to the known conditions of the gas flow, of the gas injector diameter in the tank and dimensions and features of the tank (1), a maximum or, respectively minimum temperature, in the thickness of the tank according to the time.

10. Method according to any one of claims 4 to 8, **characterised in that** the Richardson Number (Ri) for the gas in the tank (1) according to the time is calculated from the Grashof number (Gr) for the gas and the Reynolds number (Re) for the gas at the time (t) according to the following formula: Ri= $Gr/Re^2$, wherein the Grashof (Gr) and Reynolds (Re) numbers are data known or calculated from the pressure value of the gas measured or the gas mass in the tank and the average temperature of the gas Tgas,average(t) in the tank (1).

11. Method according to any one of claims 1 or 4, **characterised in that**, during a drawing off, when the temperature of the tank calculated reaches a determined low threshold (SB), the gas stream is decreased.

12. Method according to any one of claims 1 to 11, **characterised in that** it comprises a step of continuously measuring or calculating at least one from among: the pressure Pin(t) at the time (t) of the gas introduced in or drawn off from the tank, the temperature Tin(t) at the time (t) of the gas introduced in or drawn off from the tank, the pressure P(t) in the tank at the time (t), the ambient temperature Tamb(t) at the time (t), the gas mass m(t) in the tank (1) at the time (t)).

13. Method according to any one of claims 1 to 10, **characterised in that** it is implemented by a station for filling hydrogen gas tanks comprising at least one high pressure hydrogen source (10), at least one conduit (2) for transferring gas selectively connecting the source (1) to a tank (1), and an electronic member (4) for acquiring, storing and processing data such as a computer or microprocessor, said member (4) controlling the gas transfer between the source (10) and the tank (1), **characterised in that** the electronic logic (4) is programmed to calculate, in real time, at least one temperature of the tank (1) from among: the average temperature of the wall of the tank Twall,average(r,t) according to the time (t), the maximum temperature reached in the thickness of the tank Twall,max(t) according to the time, the minimum temperature reached in the thickness of the tank Twall,min(t) according to the time and to regulate the flow of the gas stream and/or of the temperature of said gas according to said temperature of the tank calculated.

14. Device for filling or drawing off gas from a tank (1) comprising a transfer conduit (2) comprising a valve (3) and which can be connected to a tank (1), the device comprising an electronic member (4) for acquiring, storing and processing data, such as a computer or microprocessor, said member (4) controlling the gas transfer between the source (10) and the tank (1), **characterised in that** the electronic logic (4) is programmed to calculate at least one temperature of the tank (1) from among: the average temperature of the wall of the tank Twall,average(r,t) according to the thickness thereof (radius r) and according to the time (t), the maximum temperature reached in the thickness of the tank Twall,max(t) according to the time, the minimum temperature reached in the thickness of the tank Twall,min(t) according to the time and to regulate the flow of the gas stream according to said temperature of the current tank calculated.

FIG.1

FIG.2

FIG.3

FIG.4

FIG.5

## FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2824378 A1

- WO 2013014346 A1

**Littérature non-brevet citée dans la description**

- **THOMAS BOURGEOIS ; AL. SEOUL.** Evaluating the temperature inside a tank during a filling with highly-pressurized gas. *Proceedings of the 20th World Hydrogen Energy Conférence,* 2014